# EUROPÄISCHE PATENTSCHRIFT

(11) **EP 0 399 326 B1**
(45) Veröffentlichungstag und Bekanntmachung des Hinweises auf die Patenterteilung: **30.11.1994**
(21) Anmeldenummer: 90109054.8
(22) Anmeldetag: 14.05.1990
(51) Int. Cl.: F16F 9/46, B60G 17/08

(54) **Stossdämpfer**
Shockabsorber
Amortisseur de choc

(30) Priorität: 26.05.1989 DE 3917063; 14.11.1989 DE 3937795
(43) Veröffentlichungstag der Anmeldung: 28.11.1990
(73) Patentinhaber: ROBERT BOSCH GMBH, 70442 Stuttgart (DE)
(72) Erfinder: Rapp, Wolfgang, D-7000 Stuttgart 70 (DE); Dittmer, Bernd, Dipl.-Ing., D-7140 Ludwigsburg (DE); Engelsdorf, Kurt, Dr.-Ing., D-7122 Besigheim 3 (DE); Taubitz, Bernd, D-7141 Schwieberdingen (DE); Schneider, Steffen, Dipl.-Ing., D-7146 Tamm-Hohenstange (DE); Weisser, Roland, Dipl.-Ing. (FH), D-7257 Ditzingen (DE)

(56) Entgegenhaltungen:
- EP-A- 0 330 535
- DE-A- 3 635 894
- DE-A- 3 800 865
- PATENT ABSTRACTS OF JAPAN vol. 10, no. 246 (M-510)(2302) 23 August 1986,& JP-A-61 75007 (TOKICO) 17 April 1986,

## Beschreibung

### Stand der Technik

Die Erfindung geht aus von einem Stoßdämpfer nach der Gattung des Hauptanspruchs. Es ist bereits ein Stoßdämpfer bekannt (DE-A-36 35 894), dessen Dämpfung mittels einer elektromagnetischen Stellvorrichtung veränderbar ist. Die Stellvorrichtung umfaßt zwei Magnetspulen und einen Steuerschieber, dessen Stellposition die Androsselung des zwischen den Arbeitsräumen sich austauschenden Druckmediums bestimmt.

Bei der bekannten Lösung ist ein Drosselquerschnitt in einem Drosseldurchlaß je nach Stellposition des Steuerschiebers mehr oder weniger geöffnet. Bei maximaler Bestromung einer der beiden Magnetspulen befindet sich der Steuerschieber in einer Endstellposition, in der, abhängig davon, welche der beiden Magnetspulen bestromt ist, ein größter Drosselquerschnitt oder ein kleinstmöglicher Drosselquerschnitt in dem Drosseldurchlaß freigegeben ist. Der größte Drosselquerschnitt bedeutet minimale Dämpfung des Stoßdämpfers und der kleinstmögliche Drosselquerschnitt bedeutet maximale Dämpfung des Stoßdämpfers. Bei einem Defekt der Stellvorrichtung, d. h. keine der beiden Magnetspulen ist angesteuert erhält man eine eher mittlere Dämpfungscharakteristik des Stoßdämpfers.

Der bekannte Stoßdämpfer benötigt zwei Magnetspulen, wobei jede dieser beiden Magnetspulen separate Zuleitungen erfordern. Da Magnetspulen bezüglich der Kosten, des Gewichts und des Bauvolumens bezogen auf den gesamten Stoßdämpfer einen erheblichen Teil ausmachen, baut dieser bekannte Stoßdämpfer relativ groß, schwer und ist aufwendig in seiner Herstellung. Zum Zurückstellen des Steuerschiebers sind zwei, in entgegengesetzte Richtungen wirkende Rückstellfedern erforderlich.

Bei einem anderen bekannten Stoßdämpfer umfaßt die Stellvorrichtung nur eine Magnetspule und bei maximaler Bestromung der Magnetspule befindet sich der Steuerschieber in einer Endstellposition, in der ein größter Drosselquerschnitt in dem Drosseldurchlaß freigegeben ist. Stromlos befindet sich der Steuerschieber in einer anderen Endstellposition, in der ein kleinster Drosselquerschnitt freigegeben ist. Dieser Stoßdämpfer kommt zwar mit einer Magnetspule aus, aber bei einem Defekt, wenn z. B. die Magnetspule versagt oder wenn eine Zuleitung der Magnetspule unterbrochen ist, erhält man eine maximale Dämpfung des Stoßdämpfers. Die maximale Dämpfung des Stoßdämpfers ist zwar bei manchen Extremsituationen erforderlich, stellt aber im Falle eines Defektes keinen optimalen Kompromiß dar.

Die Stellvorrichtung kann sowohl innerhalb des Zylinders als auch außerhalb des Zylinders vorgesehen sein.

### Vorteile der Erfindung

Gegenüber dem erstgenannten Stoßdämpfer weist der mit den kennzeichnenden Merkmalen des Hauptanspruchs ausgestattete Stoßdämpfer den Vorteil auf, daß der Steuerschieber, ausgehend von seiner Ruhelage, nur in eine einzige Richtung verstellbar sein muß. Dies hat u. a. den weiteren Vorteil, daß man mit einer einzigen Magnetspule und mit einer einzigen Rückstellfeder auskommen kann. Dadurch baut der erfindungsgemäß ausgeführte Stoßdämpfer, obwohl im Falle eines Defektes eine vorwählbare, vorzugsweise etwa mittlere Dämpfung des Stoßdämpfers eingestellt wird, relativ klein, leicht und ist kostengünstig herstellbar. Da nur eine einzige Magnetspule angesteuert werden muß, ergibt dies auch Vorteile bei dem die Magnetspule ansteuernden Steuergerät.

Durch die in den Unteransprüchen aufgeführten Maßnahmen sind vorteilhafte Weiterbildungen und Verbesserungen des im Hauptanspruch angegebenen Stoßdämpfers möglich.

Umfaßt der weitere Drosseldurchlaß mindestens zwei Durchlässe, die vorzugsweise gleichmäßig an einem Umfang des Steuerschiebers verteilt sind, so wird eine Kraft quer zu einer Verstellrichtung des Steuerschiebers in vorteilhafter Weise minimiert.

Sind, als Bestandteile des weiteren Drosseldurchlasses, an dem Steuerschieber und an dem Ventilkörper Ringräume vorgesehen, wobei das Druckmedium im Falle des Defektes durch diese Ringräume strömen kann, so bietet dies unter anderem den Vorteil, daß, um im Falle des Defektes die gewünschte Dämpfung erzielen zu können, nur ein kleiner Hub des Steuerschiebers erforderlich ist. Zusätzlich kann vorteilhafterweise eine die Dämpfung bestimmende wirksame Drosselfläche auch abseits der Ringräume an jeder beliebigen Stelle im Verlauf des weiteren Drosseldurchlasses vorgesehen sein.

Besonders vorteilhaft ist, daß in dem weiteren Drosseldurchlaß mindestens ein Ventil vorgesehen werden kann. Das Ventil kann konstruktiv beliebig ausgebildet sein. Damit ist für den Fall, daß der zweite Drosselquerschnitt freigegeben ist, z. B. wegen eines Defektes, in vorteilhafter Weise jede beliebige, gewünschte Dämpfungs-Charakteristik realisierbar.

### Zeichnung

Zwei Ausführungsbeispiele der Erfindung sind in der Zeichnung anhand je einer Figur vereinfacht dargestellt und in der nachfolgenden Beschreibung näher erläutert.

### Beschreibung der Ausführungsbeispiele

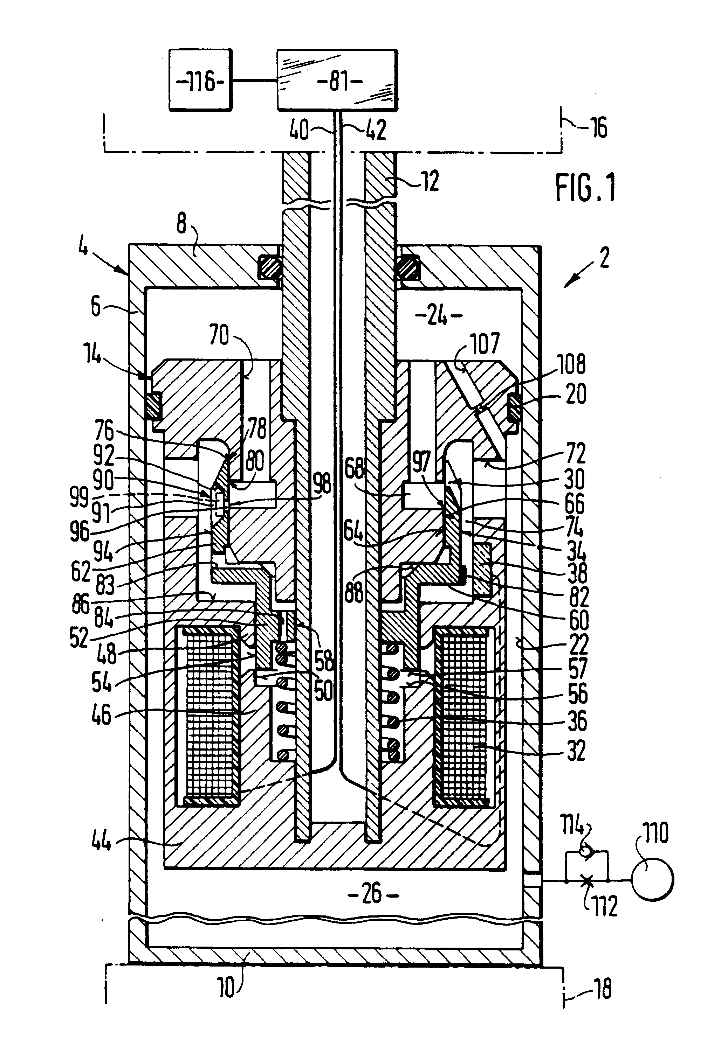

Die Figur 1 zeigt das erste Ausführungsbeispiel. Ein Stoßdämpfer 2 hat einen Zylinder 4 mit einem abschnittsweise dargestellten Mantelrohr 6 mit einer ersten Stirnseite 8 und mit einer zweiten Stirnseite 10. Aus der ersten Stirnseite 8 des Mantelrohres 6 ragt eine Kolbenstange 12 heraus. Von der Kolbenstange 12 sind nur deren beide Enden dargestellt. Die Kolbenstange 12 ist mit einem Ende mit einem abgestuften Dämpferkolben 14 verbunden und mit einem anderen Ende ist sie an einer strichpunktiert angedeuteten ersten Masse 16 angelenkt. Das heißt, der Dämpferkolben 14 ist mit der ersten Masse 16 verbunden. Die zweite Stirnseite 10 ist mit einer strichpunktiert angedeuteten zweiten Masse 18 verbunden. Die erste Masse 16 ist beispielsweise ein Fahrzeugaufbau und die zweite Masse 18 ist z. B. eine Fahrzeugachse. Der Dämpferkolben 14 kann unter Zwischenlage eines Führungsringes 20 an einer inneren Mantelfläche 22 des Mantelrohres 6 axial gleiten. Der Führungsring 20 hat gleichzeitig die Aufgabe einer Dichtung. Ein Innenraum des Zylinders 4 wird durch den Dämpferkolben 14 in einen ersten Arbeitsraum 24 und in einen zweiten Arbeitsraum 26 unterteilt. In der Zeichnung befindet sich der erste Arbeitsraum 24 oberhalb und der zweite Arbeitsraum 26 unterhalb des Dämpferkolbens 14. Die Arbeitsräume 24, 26 sind zumindest teilweise mit einem Druckmedium gefüllt.

Die beiden Arbeitsräume 24, 26 sind über einen Drosseldurchlaß 30 miteinander verbunden. Der Drosseldurchlaß 30 umfaßt einen veränderbaren Drosselquerschnitt. Der Dämpferkolben 14 enthält den Drosseldurchlaß 30, eine Magnetspule 32, einen Steuerschieber 34, eine Rückstellfeder 36 und, je nach Bedarf, einen Geber 38.

Die Kolbenstange 12 ist hohl und nimmt eine erste Zuleitung 40 auf, an welche die Magnetspule 32 angeschlossen ist. Eine zweite Zuleitung 42 führt ebenfalls durch die hohl ausgebildete Kolbenstange 12. Der Geber 38 ist an der zweiten Zuleitung 42 angeschlossen. Die Magnetspule 32 befindet sich innerhalb eines einen Teil des Dämpferkolbens 14 bildenden Ventilkörpers 44. Der Ventilkörper 44 bildet an der Innenseite der Magnetspule 32 einen ringförmigen ersten Pol 46.

Ein zweiter, ebenfalls ringförmiger Pol 48, welcher mit dem Ventilkörper 44 verbunden ist, erstreckt sich unter Wahrung eines gewissen Abstandes axial in Richtung auf den ersten Pol 46. Beide Pole 46, 48 sind mit einer koaxialen Bohrung 50 versehen, in welche ein als ker 52 wirkender Teilbereich des hülsenförmigen Steuerschiebers 34 zumindest teilweise hineinragt. Je nach der Stellposition des Steuerschiebers 34 in der Bohrung 50 überdeckt der Anker 52 in axialer Richtung nicht nur den zweiten Pol 48, sondern auch mehr oder weniger den ersten Pol 46. Die für eine auf den Anker 52 einwirkende Magnetkraft maßgebenden Luftspalte befinden sich zwischen einem zylindrischen Außenmantel 54 des Ankers 52 und der die radialen Polflächen der Pole 46, 48 bildenden Bohrung 50, sowie zwischen einem sacklochartig zurückversetzten axialen Absatz 56 des ersten Poles 46 und einer dem Absatz 56 zugewandten Stirnseite 57 des Ankers 52.

Im Steuerschieber 34 befindet sich eine axiale Durchgangsbohrung 58, in welche die Kolbenstange 12 eingesetzt ist, so daß der Steuerschieber 34 auf ihr axial gleitend verschiebbar ist. Mittels der die Kolbenstange 12 umgebenden Rückstellfeder 36 wird der Steuerschieber 34 mit einer in axialer Richtung wirkenden Rückstellkraft beaufschlagt, die bestrebt ist, den Steuerschieber 34 vom ersten Pol 46 wegzubewegen. Dementsprechend wird der Anker 52 und damit der Steuerschieber 34 bei elektrischer Erregung der Magnetspule 32 entgegen der Rückstellkraft der Rückstellfeder 36 in Richtung auf eine stärkere Überdeckung zwischen dem zylindrischen Außenmantel 54 des Ankers 52 und dem ersten Pol 46 bewegt.

Der Rückstellfeder 36 abgewandt geht der Anker 52 über eine Erweiterung in Form einer Ringscheibe 60 in ein hülsenförmiges Steuerteil 62 des Steuerschiebers 34 über, wobei der Durchmesser des Steuerteils 62 in dem dargestellten Ausführungsbeispiel vorteilhafterweise größer ist als der Durchmesser des Ankers 52. Das Steuerteil 62 kann entweder, wie in der Zeichnung dargestellt, zusammen mit dem Anker 52 Bestandteil eines Bauteils, dem Steuerschieber 34, sein oder aus zwei zusammengefügten Bauteilen bestehen.

Das hülsenförmige Steuerteil 62 des Steuerschiebers 34 kann mit einer fein bearbeiteten inneren Mantelfläche 64 auf einer ebenfalls fein bearbeiteten Mantelfläche 66 des Ventilkörpers 44 gleiten.

In der Mantelfläche 66 des Ventilkörpers 44 ist ein umlaufender Ringraum 68 eingearbeitet. Eine oder mehrere axial außermittig verlaufende Aussparung bzw. Aussparungen 70 stellt bzw. stellen eine Durchflußmöglichkeit zwischen dem Ringraum 68 und dem ersten Arbeitsraum 24 her. Radial um den Ringraum 68 herum und außerhalb des Steuerschiebers 34 ist im Ventilkörper 44 mindestens eine Strömungsöffnung 72 eingearbeitet, welche eine Druchfluflmöglichkeit zwischen einem den Steuerschieber 34 aufnehmenden Steuerraum 74 und dem zweiten Arbeitsraum 26 herstellt.

Die Länge des Steuerschiebers 34 ist so bemessen, daß, je nach axialer Stellposition des Steuerschiebers 34, der Steuerschieber den Ringraum 68 in axialer Richtung mehr oder weniger überdeckt. Am Steuerteil 62 des Steuerschiebers 34 befindet sich, der Magnetspule 32 abgewandt, eine Stirnseite 76. Die Kante zwischen der inneren Mantelfläche 64 und der Stirnseite 76 des Steuerschiebers 34 ist als Schiebersteuerkante 78 ausgebildet, welche im Zusammenwirken mit einer den Ringraum 68 begrenzenden Steuerkante 80 die Größe des veränderbaren Drosselquerschnittes des ersten Drosseldurchlasses 30 bestimmt. Die Aussparung 70, der Ringraum 68, der veränderbare Drosselquerschnitt, der Steuerraum 74 und die Strömungsöffnung 72 sind Bestandteile des die beiden Arbeitsräume 24, 26 im regulären Betriebszustand verbindenden Drosseldurchlasses 30.

Am Ventilkörper 44 ist in der Nähe des Steuerschiebers 34 der Geber 38 befestigt, welcher der Erfassung der Stellposition des Steuerschiebers 34 relativ zum Ventilkörper 44 dient. Der Geber 38, welcher beispielsweise induktiv oder kapazitiv mißt, gibt über die zweite Zuleitung 42 ein Meßsignal an eine elektronische Steuereinheit 81, welche über einen Soll-/Ist-Vergleichsoperator ein Stellsignal erzeugt, das über die erste Zuleitung 40 der Magnetspule 32 zugeführt wird. Damit wird ein Regelkreis gebildet, und der Steuerschieber 34 läßt sich wesentlich genauer und von Toleranzen unabhängiger positionieren als ohne Rückmeldung der Ist-Stellung des Steuerschiebers 34. Je nach Funktionsweise des Gebers 38 ist es notwendig oder zumindest zweckmäßig, an dem Steuerschieber 34 ein geeignetes Markierungsmaterial 82, z. B. einen Dauermagneten oder einen Kupferring, vorzusehen, damit der Geber 38 die Stellposition des Steuerschiebers 34 einwandfrei erfassen kann.

Die Schiebersteuerkante 78 und/oder die Steuerkante 80 können mit einem Profil mit in axialer Richtung sich erstreckenden Erhebungen und Vertiefungen versehen sein, wie aus der DE-OS 38 00 865 bekannt.

Der Steuerschieber 34 kann so gestaltet werden, daß auf den Steuerschieber 34 keine statischen hydraulischen Kräfte und keine oder so gut wie keine axialen Strömungskräfte wirken. Eine der Maßnahmen hierfür kann sein, daß der Steuerschieber 34 im Bereich der Stirnseite 76 in etwa schneidenartig ausgebildet ist und daß Entlastungsverbindungen 83 und 84 und/oder ein Spiel zwischen dem Steuerschieber 34 und dem Ventilkörper 44 bzw. der Kolbenstange 12 für Druckausgleich sorgt. Weitere Maßnahmen zur Reduzierung der auf den Steuerschieber 34 einwirkenden statischen Kräfte und Strömungskräfte sind in der DE-OS 38 00 865 angegeben. Das dort zu dem Stoßdämpfer nach der DE-OS 38 00 865 Gesagte gilt auch für den Stoßdämpfer nach dieser Anmeldung.

Je nach Bestromung der Magnetspule 32 wird der Steuerschieber 34 gegen die Rückstellkraft der Rückstellfeder 36 betätigt. Die Stellposition des Steuerschiebers 34 wird begrenzt, indem der Anker 52 des Steuerschiebers 34 an dem Absatz 56 oder die Ringscheibe 60 an einem anderen Absatz 86 des Ventilkörpers 44 zur Anlage kommt, je nach Toleranzlage der Bauteile. Mit nachlassender Magnetkraft der Magnetspule 32 betätigt die Rückstellkraft der Rückstellfeder 36 den Steuerschieber 34 in die entgegengesetzte Richtung, bis die Ringscheibe 60 des Steuerschiebers 34 an einem weiteren Absatz 88 des Ventilkörpers 44 zur Anlage kommt. Die Ringscheibe 60 des Steuerschiebers 34 kommt an dem Absatz 88 zur Anlage, wenn die Magnetspule 32 relativ schwach bzw. nicht bestromt ist.

Ist die Magnetspule 32 stark bestromt, dann hebt die Schiebersteuerkante 78 weit von der Steuerkante 80 ab und der veränderbare Drosselquerschnitt des Drosseldurchlasses 30 ist groß, d. h. die Dämpfung des Stoßdämpfers ist klein. Ist die Magnetspule 32 schwach bestromt, dann ist die Schiebersteuerkante 78 dicht an der Steuerkante 80 bzw. die Schiebersteuerkante 78 überdeckt die Steuerkante 80, je nach konstruktiver Ausführung, ganz oder teilweise und der veränderbare Drosselquerschnitt des Drosseldurchlasses 30 ist klein, und damit ist die Dämpfung des Stoßdämpfers groß. Ist die Magnetspule 32 unbestromt, z. B. infolge irgendeines Defektes, so liegt die Ringscheibe 60 des Steuerschiebers 34 an dem Absatz 88 an, und der veränderbare Drosselquerschnitt des Drosseldurchlasses 30 erreicht sein Minimum bzw. ist, je nach konstruktiver Ausführung, vollständig geschlossen.

Damit sich bei einem Defekt, z. B. wegen Stromausfall, nicht die maximale Dämpfung des Stoßdämpfers ergibt, ist das Steuerteil 62 des Steuerschiebers 34 mit mindestens einem Durchlaß 91 versehen. Dadurch kann, je nach Stellposition des Steuerschiebers 34 ein weiterer Drosseldurchlaß 90 freigegeben werden. Die Aussparung 70, der Ringraum 68, der Durchlaß 91 bzw. die Durchlässe 91, der Steuerraum 74 und die Strömungsöffnung 72 sind Bestandteile des die beiden Arbeitsräume 24, 26 im Falle eines Defektes verbindenden weiteren Drosseldurchlasses 90. Der Drosseldurchlaß 30 und der weitere Drosseldurchlaß 90 können, wie zeichnerisch dargestellt, im Verlauf ihres Stromungsweges streckenweise zusammenfallen oder aber vollkommen getrennt verlaufen.

Der Durchlaß 91 enthält beispielhaft eine Ansenkung 92. Die Ansenkung 92 erstreckt sich, ausgehend von einem Außenmantel 94 des Steuerteils 62 des Steuerschiebers 34, in Richtung der Mantelfläche 64, wobei die Ansenkung 92 kurz vor Erreichen der Mantelfläche 64 in einen Schlitz 96 übergeht. Der Durchlaß 91 besteht aus der Ansenkung 92 und dem Schlitz 96. Dies ist fertigungstechnisch besonders vorteilhaft. Der Schlitz 96 ist vorzugsweise rechteckig; er kann aber auch z.B. rund sein. Um den Stoßdämpfer möglichst kurz bauen zu können, ist es günstig, den Schlitz 96 schmal auszuführen und ihn in Umfangsrichtung auszurichten. Es ist aber auch möglich, den Durchlaß 91 ohne Abstufung, z. B. in Form einer einfachen Durchgangsbohrung, auszuführen. Ist die Schiebersteuerkante 78 mit mindestens einer Erhebung und Vertiefung versehen, so ist es möglich, daß die Vertiefung an einer Engstelle in den Durchlaß 91 des weiteren Drosseldurchlasses 90 übergeht.

Der Ringraum 68 wird zur Mantelfläche 66 des Ventilkörpers 44 durch die Steuerkante 80 und andererseits durch eine weitere Kante 97 begrenzt. Liegt die Ringscheibe 60 des Steuerschiebers 34 am Absatz 88 des Ventilkörpers 44 an, so ist der Durchlaß 91 des weiteren Drosseldurchlasses 90 zwischen dem Ringraum 68 und dem Steuerraum 74 mindestens teilweise geöffnet. Der Schlitz 96 des Drosseldurchlasses 90 kann so angeordnet sein, daß, wenn die Ringscheibe 60 des Steuerschiebers 34 an dem Absatz 88 des Ventilkörpers 44 anliegt, der Schlitz 96 vollständig geöffnet ist, oder der Schlitz 96 ist so angeordnet, daß er, wie in der Figur 1 dargestellt, bei dieser Stellposition des Steuerschiebers 34 teilweise von der Kante 97 überdeckt wird.

Um auf den Steuerschieber 34 einwirkende radiale Kräfte zu vermeiden oder zumindest so klein wie möglich zu halten, ist es gunstig, wenn der weitere Drosseldurchlaß 90 mehrere Durchlässe 91 umfaßt. Besonders zweckmäßig ist es, die Durchlässe 91 möglichst gleichmäßig, d. h. in gleichen Abständen am Umfang des Steuerschiebers 34 anzuordnen. Umfaßt der weitere Drosseldurchlaß 90 zwei Durchlässe 91, so sollten diese am Steuerschieber 34 diagonal gegenüberstehend vorgesehen sein. Bei mindestens zwei Durchlässen 91 ist es zweckmäßig, diese in axialer Richtung gleich anzuordnen.

In der Zeichnung ist der Steuerschieber 34 dargestellt, wie er bei unbestromter Magnetspule 32 steht. Die Schiebersteuerkante 78 des Steuerschiebers 34 hat ein Profil mit in axialer Richtung sich erstreckenden Erhebungen und Vertiefungen. Für die Figur 1 wurde ein Längs schnitt durch den Stoßdämpfer so gewählt, daß im linken Teil der Zeichnung der Steuerschieber 34 im Bereich einer Erhebung und im rechten Teil der Zeichnung im Bereich einer Vertiefung geschnitten wird. Bei dem in Figur 1 beispielhaft gezeigten Stoßdämpfer ist auch bei unbestromter Magnetspule 32 noch ein minimaler Teil des Drosseldurchlasses 30 mit dem veränderbaren Drosselquerschnitt geöffnet. Es ist aber auch möglich, den Steuerschieber 34 so zu gestalten, daß bei unbestromter Magnetspule 32 der veränderbare Drosselquerschnitt vollständig geschlossen ist. Bei dem dargestellten Stoßdämpfer 2 überdecken die Erhebungen des Steuerschiebers 34 die Steuerkante 80, so daß der veränderbare Drosselquerschnitt des Drosseldurchlasses 30 nur im Bereich der Vertiefungen gebildet wird und, je nach Anzahl der Erhebungen und Vertiefungen aus mehreren veränderbaren Drosselquerschnitten besteht. Der Schnitt durch den Stoßdämpfer 2 ist so gewählt, daß im linken Teil der Zeichnung der Schnitt durch einen Durchlaß 91 des zweiten Drosseldurchlasses 90 verläuft.

Im regulären Betriebszustand, d. h. wenn die Magnetspule 32 wie vorgesehen bestromt ist, ist der Steuerschieber 34 gegen die Rückstellfeder 36 so weit betätigt, daß der Schlitz 96 des Durchlasses 91 des weiteren Drosseldurchlasses 90 von der Kante 97 des Ventilkörpers 44 vollständig überdeckt ist. Somit ist im regulären Betriebszustand des Stoßdämpfers der weitere Drosseldurchlaß 90 vollständig geschlossen und somit außer Funktion. Im regulären Betriebszustand des Stoßdämpfers 2 kann das Druckmedium nur durch den Drosseldurchlaß 30 mit dem veränderbaren Drosselquerschnitt strömen. Der Stoßdämpfer kann konstruktiv so ausgeführt sein, daß im regulären Betriebszustand der Drosselquerschnitt des Drosseldurchlasses 30 zwischen einem sehr kleinen Minimum und einem sehr großen Maximum veränderbar ist. Damit ist im regulären Betriebszustand jede gewünschte Dämpfung des Stoßdämpfers realisierbar, und der Stoßdämfer kann jeder auftretenden Situation und jedem Kundenwunsch gerecht werden.

Wird nun aber infolge eines Defektes die Magnetspule 32 z. B. stromlos oder sonstwie wirkungslos, so betätigt die Rückstellkraft der Rückstellfeder 36 den Steuerschieber 34 gegen den Absatz 88 des Ventilkörpers 44 und der Drosseldurchlaß 30 wird über das reguläre Maß hinaus geschlossen. Gleichzeitig aber, wenn der Steuerschieber 34 über das reguläre Maß hinaus in Richtung des Absatzes 88 betätigt wird, öffnet sich der weitere Drosseldurchlaß 90.

Eine Androsselung des durch den weiteren Drosseldurchlaß 90 durchströmenden Druckmediums wird im wesentlichen von einer engsten Stelle des weiteren Drosseldurchlasses 90 bestimmt. Eine hydraulisch wirksame Fläche 98 dieser engsten Stelle wird nachfolgend als wirksame Drosselfläche 98 des weiteren Drosseldurchlasses 90 bezeichnet. Ist im Falle des Defektes der Schlitz 96 vollständig geöffnet, so bildet, in erster Näherung, die Querschnittsfläche des Schlitzes 96 die wirksame Drosselfläche 98. Ist aber im Falle des Defektes ein Teil des Schlitzes 96 von der Kante 97 abgedeckt, so bildet, grob betrachtet, der noch freie Teil des Schlitzes 96 die wirksame Drosselfläche 98. Die wirksame Drosselfläche 98 kann sich auch aus mehreren wirksamen Einzel-Drosselflächen mehrerer Schlitze 96 bzw. Durchlässe 91 zusammensetzen.

Die im Falle eines Defektes wirksame Drosselfläche 98 des weiteren Drosseldurchlasses 90 kann beliebig groß gewählt werden. Damit ist es möglich, den Stoßdämpfer so zu gestalten, daß im Falle eines Defektes sich jede beliebig wählbare, vorzugsweise aber z. B. eine mittlere Dämpfung einstellt, und es werden auch im Falle eines Defektes extreme Situationen vermieden.

In den Durchlaß 91 bzw. in mehrere Durchlässe 91 und damit in den weiteren Drosseldurchlaß 90 kann auch ein in der Zeichnung gestrichelt dargestelltes Ventil 99 eingebaut sein. Das Ventil 99 kann z. B. ein Druckbegrenzungsventil, insbesondere ein Plattenventil oder ein Blendenventil, ein Drosselventil, ein Rückschlagventil oder eine Kombination dieser Ventile sein. Je nach Ausführung des Ventils 99 kann dem Stoßdämpfer im Falle des Defektes, d. h. wenn der zweite Drosselquerschnitt 90 freigegeben ist, jede beliebige, gewünschte Dämpfungs-Charakteristik verliehen werden. Die wirksame Drosselfläche 98 wird hierbei innerhalb des Ventils 99 gebildet. In den weiteren Drosseldurchlaß 90 können auch mehrere Ventile 99 eingebaut werden, dann ist z. B. eines der Ventile 99 verantwortlich für die Dämfung, wenn das Druckmedium aus dem ersten Arbeitsraum 24 in den zweiten Arbeitsraum 26 strömt, und ein anderes Ventil 99 ist z. B. für die Dämpfung bei umgekehrter Strömungsrichtung zuständig, wobei das gerade nicht zuständige Ventil 99 dann ggf. geschlossen ist.

Es ist auch möglich, den Stoßdämpfer so zu steuern, daß der weitere Drosseldurchlaß 90 nicht nur im Falle eines Defektes freigegeben wird, sondern auch wenn man die Dämpfungs-Charakteristik z. B. des Ventils 99 wünscht.

Es ist auch möglich, anstatt des Ringraumes 68 nur einzelne radiale Durchlässe durch den Ventilkörper 44 vorzusehen, ähnlich der Durchlässe 91 durch den Steuerschieber 34. Es kann aber auch der Ringraum 68 in den Steuerschieber 34 und die Durchlässe 91 und das Ventil 99 in den Ventilkörper 44 verlegt sein. Da dies einfache konstruktive Varianten sind, wird auf eine zeichnerische Darstellung verzichtet.

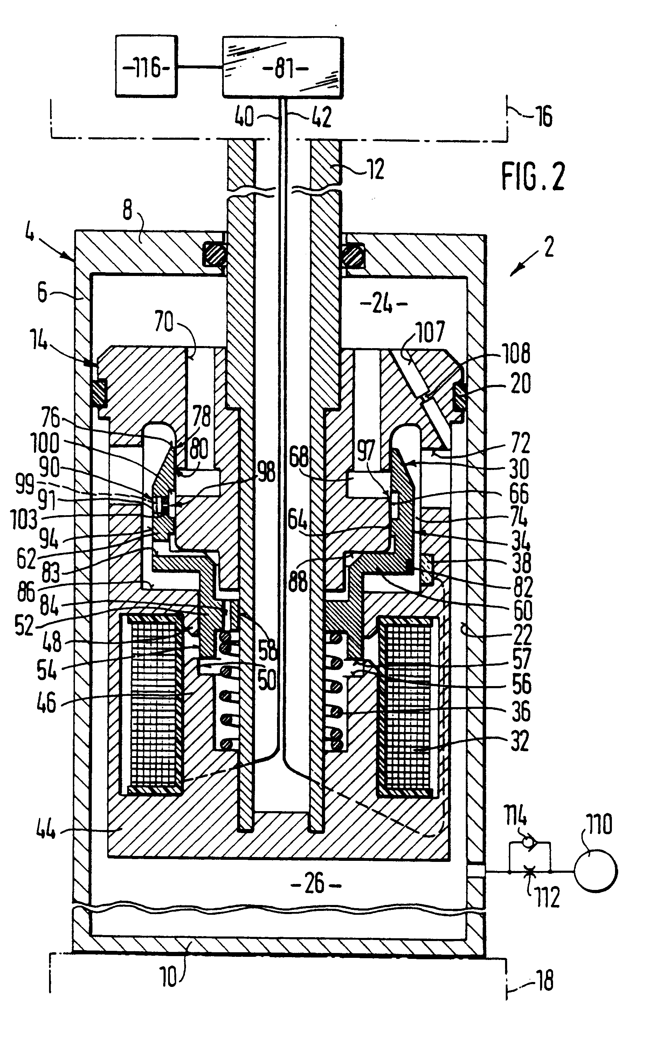

Damit im Falle des Defektes eine ausreichend große wirksame Drosselfläche 98 zur Verfügung steht, muß der Schlitz 96 ausreichend groß sein. Um den Hub des Steuerschiebers 34 auf ein vernünftiges Maß begrenzen zu können, darf der Schlitz 96 in Hubrichtung sich nicht zu weit erstrecken; d. h. der Schlitz 96 sollte in Hubrichtung schmal sein. Dafür muß er sich aber relativ weit in Umfangsrichtung erstrecken. Die Herstellung sehr schmaler aber langer Schlitze ist fertigungstechnisch nicht gerade einfach. Deshalb wurde bei dem zweiten Ausführungsbeispiel nach Figur 2 am Steuerschieber 34 ein Ringraum 100 vorgesehen.

In allen Figuren sind gleiche oder gleichwirkende Teile mit denselben Bezugszeichen versehen.

Im Ausführungsbeispiel nach Figur 2 umfaßt der weitere Drosseldurchlaß 90 zusätzlich den Ringraum 100. Der Ringraum 100 unterbricht die Mantelfläche 64 des Steuerschiebers 34. Der Ringraum 100 ist ein radialer Einstich an der Mantelflache 64 des Steuerschiebers 34. Der Durchlaß 91 verbindet den Ringraum 100 mit dem dem Ringraum 100 abgewandten Außenmantel 94; d. h. der Durchlaß 91 verbindet den Ringraum 100 mit dem zweiten Arbeitsraum 26.

Der Ringraum 100 ist an der Mantelfläche 64 des Steuerschiebers 34 so angeordnet, daß zwischen dem Ringraum 100 und dem Ringraum 68 im regulären Betriebszustand des Stoßdämpfers 2 keine Verbindung besteht. Im Falle des Defektes, d. h. wenn die Rückstellfeder 36 den Steuerschieber 34 gegen den Absatz 88 des Ventilkörpers 44 betätigt, fährt der Ringraum 100 mindestens teilweise über die feststehende Kante 97 des Ventilkörpers 44 hinaus. Der Steuerschieber 34 mit dem Ringraum 100 befindet sich im Falle des Defektes in einer Lage, in der zwischen dem feststehenden Ringraum 68 und dem Ringraum 100 eine nahezu nichtdrosselnde Verbindung besteht. Da sich der Ringraum 68 vorteilhafterweise über die gesamte Mantelfläche 66 des Ventilkörpers 44 und der Ringraum 100 über den gesamten Umfang der Mantelfläche 64 des Steuerschiebers 34 erstrecken, ist, um eine nichtdrosselnde Verbindung zwischen dem Ringraum 68 und dem Ringraum 100 zu erhalten, eine vorteilhafterweise kleine, die Verbindung schaffende Überdeckung zwischen dem Ringraum 68 und dem Ringraum 100 ausreichend. Die eigentliche Androsselung des durch den weiteren Drosseldurchlaß 90 strömenden Druckmediums geschieht vorteilhafterweise im wesentlichen an der wirksamen Drosselfläche 98 des Durchlaßes 91 bzw. der Durchlässe 91. Der Durchlaß 91 kann bei dem zweiten Ausführungsbeispiel nach Figur 2 beliebig gestaltet sein. Besonders zweckmäßig ist es, den Durchlaß 91 rund auszuführen. Bei Bedarf kann an dem Durchlaß 91 oder in dem Durchlaß 91 eine Blende 103 angeordnet sein. Diese Blende 103 hat ein Loch, wobei dieses Loch im wesentlichen die wirksame Drosselfläche 98 des weiteren Durchlasses 90 bestimmt. Um eine weitgehend viskositätsunabhängige Androsselung des durchströmenden Druckmediums zu erhalten, ist es zweckmäßig, das durch die Blende 103 durchführende Loch möglichst kurz zu gestalten. Die Blende 103 kann auch vorteilhafterweise nachträglich noch ausgetauscht werden. Bei Verzicht auf die Blende 103 kann der Durchlaß 91 selbst die wirksame Drosselfläche 98 bestimmen.

In der Figur 2 ist der Steuerschieber 34 in seiner im Falle des Defektes eingenommenen Stellung dargestellt. In dieser Stellung ist der weitere Drosseldurchlaß 90 geöffnet. In dem zweiten Ausführungsbeispiel ist der Steuerschieber 34 so gestaltet, daß im Falle des Defektes der Drosseldurchlaß 30 mit dem veränderbaren Drosselquerschnitt geschlossen ist.

In der Zeichnung ist der Übersichtlichkeit wegen der Ventilkörper 44 so dargestellt, als ob er aus einem Stück bestehen würde. Um aber z. B. die Magnetspule 32, die Rückstellfeder 36 und den Steuerschieber 34 montieren zu können, ist es notwendig, den Ventilkörper 44 aus mehreren Stticken herzustellen und zusammenzufügen, was jedem Fachmann geläufig ist.

Neben dem Drosseldurchlaß 30 und dem weiteren Drosseldurchlaß 90 kann der Dämpferkolben 14 auch noch mit mindestens einer weiteren Strömungsverbindung 107 versehen sein. In der weiteren Strömungsverbindung 107 kann sich z. B. eine variable oder konstante Drossel oder Blende 108 befinden.

Der Drosseldurchlaß 30, der weitere Drosseldurchlaß 90 und die Strömungsverbindung 107 sind in den dargestellten Ausführungsbeispielen im Dämpferkolben 14 angeordnet. Es ist aber auch möglich, die Drosseldurchlässe 30, 90 und/oder die weitere Strömungsverbindung 107 und/oder weitere Strömungsverbindungen außerhalb des Dämpferkolbens 14 z. B. an einer Außenfläche des Mantelrohres 6 des Zylinders 4 oder aber auch an einer sonstigen nicht dargestellten Trennwand innerhalb des Zylinders 4 anzuordnen.

Beim Einfahren der Kolbenstange 12 in den Zylinder 4 wird entsprechend dem Kolbenstangen-Querschnitt ein Teil des Druckmediums aus dem Zylinder 4 verdrängt. Beim Ausfahren der Kolbenstange 12 aus dem Zylinder 4 soll in den Zylinder 4 Druckmedium nachströmen können. Zu diesem Zweck ist der zweite Arbeitsraum 26 mit einem Ausgleichsraum 110 verbunden. Damit auch bei einem relativ niedrigen Druck in dem Ausgleichsraum 110 in dem zweiten Arbeitsraum 26 ein relativ hoher Druck und damit eine relativ große Dämpfung erzeugt werden kann, wurde zwischen dem Ausgleichsraum 110 und dem zweiten Arbeitsraum 26 eine Drossel 112 eingebaut. Beim Rückströmen des Druckmediums aus dem Ausgleichsraum 110 in den zweiten Arbeitsraum 26 ist die Drossel 112 nicht erforderlich, weshalb dieser Drossel 112 ein Rückschlagventil 114 parallel angeordnet ist. Das Rückschlagventil 114 ist so eingebaut, daß das Druckmedium nur bei Fließrichtung aus dem Ausgleichsraum 110 in den Arbeitsraum 26 durch das Rückschlagventil 114 strömen kann. Der Ausgleichsraum 110 kann z. B. ein mit Gas gefüllter Druckspeicher sein. Der Ausgleichsraum 110 kann selbstverständlich auch in bekannter Weise im Zylinder 4 integriert sein.

Je nach gewünschter Dämpfung und je nach Vorspanndruck des Gases im Ausgleichsraum 110 kann gegebenenfalls auf die Drossel 112 und das Rückschlagventil 114 verzichtet werden.

Damit bei Relativbewegung zwischen dem Dämpferkolben 14 und dem Mantelrohr 6 das in einem der Arbeitsräume 24, 26 verdrängte Druckmedium-Volumen gleich dem im anderen Arbeitsraum nachfließenden Volumen ist, kann eine doppelte Kolbenstange 12 verwendet werden, die beiderseits des Dämpferkolbens 14 aus den Stirnseiten 8, 10 des Zylinders 4 herausragt. Besonders, günstig ist es, wenn beide Seiten der doppelten Kolbenstange 12 in etwa gleiche Durchmesser haben.

Als Ausführungsbeispiel wurde für den erfindungsgemäßen Stoßdämpfer ein Einrohr-Stoßdämpfer gewählt. Dies ist jedoch nur beispielhaft. Der Stoßdämpfer könnte genausogut z. B. ein sogenannter Zweirohr-Stoßdämpfer sein.

Wie bereits weiter vorne erwähnt, bestimmt im regulären Betriebszustand im wesentlichen der Drosseldurchlaß 30 mit seinem veränderbaren Drosselquerschnitt die Dämpfung des Stoßdämpfers, und im Falle eines Defektes bestimmt hauptsächlich der weitere Drosseldurchlaß 90 mit der wirksamen Drosselfläche 98 die Dämpfung des Stoßdämpfers 2. Wie jeder Fachmann weiß, ist die Dämpfung des Stoßdämpfers nicht nur von einem Drosselquerschnitt bzw. einer Drosselfläche abhängig, sondern selbstverständlich spielt auch die Relativgeschwindigkeit zwischen dem Dämpferkolben 14 und dem Mantelrohr 6 eine Rolle.

Durch einen Geber 116 kann über die Steuereinheit 81 im regulären Betriebszustand die Größe des veränderbaren Drosselquerschnitts des Drosseldurchlasses 30 eingestellt werden. Der Geber 116 kann z. B. ein Sensor und/oder ein Handhebel sein. Ist der Stoßdämpfer in erfinderischer Weise mit dem weiteren Drosseldurchlaß 90 versehen, so kann der veränderbare Drosselquerschnitt des Drosseldurchlasses 30 vorteilhafterweise in sehr weiten Grenzen veränderbar gestaltet sein, ohne befürchten zu müssen, daß im Falle eines Defektes sich eine unerwünschte, eventuell sogar gefährliche extreme Dämpfung einstellt.

In den in der Zeichnung dargestellten Ausführungsbeispielen umgibt, in radialer Richtung betrachtet, das Steuerteil 62 des Steuerschiebers 34 im Bereich der Mantelflächen 64, 66 den Ventilkörper 44. Eine umgekehrte Anordung ist aber auch möglich, so daß sich der Steuerschieber 34 zumindest im Bereich der Mantelflächen 64, 66 in radialer Richtung betrachtet, nach innen hin direkt an den Ventilkörper 44 anschließt. D. h. zumindest im Bereich des Druckmedium-Übergangs zwischen dem Ventilkörper 44 und dem Steuerschieber 34 umschließt der Ventilkörper 44 den Steuerschieber 34. Da es sich hierbei nur um eine Umkehrung, welche konstruktiv leicht zu bewerkstelligen ist, handelt, ist diese Ausführungsvariante nicht zeichnerisch dargestellt.

## Patentansprüche

1. Stoßdämpfer, insbesondere für Fahrzeuge, mit einem in einem ein Druckmedium enthaltenden Zylinder (4) verschiebbaren, diesen in einen ersten und in einen zweiten Arbeitsraum (24, 26) unterteilenden Dämpferkolben (14), wobei der Zylinder und der Dämpferkolben an jeweils einer Masse (16, 18) angelenkt sind, sowie mit mindestens einem einen veränderbaren Drosselquerschnitt (30) enthaltenden Drosseldurchlaß zwischen den Arbeitsräumen, ferner mit einem, durch eine entgegen einer Rückstellkraft einer Rückstellfeder (36) wirkenden Verstellkraft gegenüber einem Ventilkörper verstellbaren Steuerschieber (34), dessen Stellposition den Drosselquerschnitt (30) bestimmt, dadurch gekennzeichnet, daß ein weiterer Drosseldurchlaß (90) vorgesehen ist, der bei einem Defekt freigebbar ist.

2. Stoßdämpfer nach Anspruch 1, dadurch gekennzeichnet, daß der den veränderbaren Drosselquerschnitt enthaltende Drosseldurchlaß (30) im Falle des Defekts geschlossen ist.

3. Stoßdämpfer nach Anspruch 1 oder Anspruch 2, dadurch gekennzeichnet, daß der weitere Drosseldurchlaß (90) mindestens einen Durchlaß (91) umfaßt, wobei eine, eine Dämpfung des Stoßdämpfers (2) im Falle des Defektes bestimmende wirksame Drosselfläche (98) im Bereich des mindestens einen Durchlasses (91) gebildet ist.

4. Stoßdämpfer nach Anspruch 3, dadurch gekennzeichnet, daß der weitere Drosseldurchlaß (90) mehrere Durchlässe (91) umfaßt.

5. Stoßdämpfer nach Anspruch 4, dadurch gekennzeichnet, daß die Durchlässe (91) mit gleichmäßigem Abstand über dem Steuerschieber (34) verteilt sind.

6. Stoßdämpfer nach Anspruch 4 oder 5, dadurch gekennzeichnet, daß der weitere Drosseldurchlaß (90) zwei Durchlässe (91) umfaßt, die am Steuerschieber (34) diagonal gegenüberstehend angeordnet sind.

7. Stoßdämpfer nach einem der Ansprüche 1 bis 6, dadurch gekennzeichnet, daß an dem Steuerschieber (34) und an dem Ventilkörper (44) je eine Mantelfläche (64, 66) vorgesehen ist, wobei, als Bestandteil des weiteren Drosseldurchlasses (90), mindestens die Mantelfläche (66) des Ventilkörpers (44) durch einen Ringraum (68) oder die Mantelfläche (64) des Steuerschiebers (34) durch einen Ringraum (100) unterbrochen ist.

8. Stoßdämpfer nach Anspruch 7, dadurch gekennzeichnet, daß an dem Steuerschieber (34) und an dem Ventilkörper (44) je ein Ringraum (68, 100) vorgesehen ist.

9. Stoßdämpfer nach einem der Ansprüche 1 bis 8, dadurch gekennzeichnet, daß in dem weiteren Drosseldurchlaß (90) mindestens ein Ventil (99) vorgesehen ist.

## Claims

1. Shock absorber, in particular for vehicles, having a damper piston (14) which can be displaced in a cylinder (4) containing a pressure medium and which divides this cylinder into a first and a second working space (24, 26), the cylinder and the damper piston each being linked to a mass (16, 18), and having at least one throttle passage containing a variable throttle cross-section (30) between the working spaces, furthermore having a control slide (34) which can be adjusted relative to a valve body by an adjusting force acting against a return force of a return spring (36), the setting position of the control slide determining the throttle cross-section (30), characterized in that a further throttle passage (90) is provided which can be released in the case of a defect.

2. Shock absorber according to Claim 1, characterized in that the throttle passage (30) containing the variable throttle cross-section is closed in the case of the defect.

3. Shock absorber according to Claim 1 or Claim 2, characterized in that the further throttle passage (90) includes at least one passage (91), an effective throttle area (98) determining a damping of the shock absorber (2) in the case of the defect being formed in the region of the at least one passage (91).

4. Shock absorber according to Claim 3, characterized in that the further throttle passage (90) includes a plurality of passages (91).

5. Shock absorber according to Claim 4, characterized in that the passages (91) are distributed at equal distances over the control slide (34).

6. Shock absorber according to Claim 4 or 5, characterized in that the further throttle passage (90) includes two passages (91) which are arranged diagonally opposite to one another on the control slide (34).

7. Shock absorber according to one of Claims 1 to 6, characterized in that one generated surface (64, 66) each is provided on the control slide (34) and on the valve body (44), whereby, as a constituent part of the further throttle passage (90), at least the generated surface (66) of the valve body (44) is interrupted by an annular space (68) or the generated surface (64) of the control slide (34) is interrupted by an annular space (100).

8. Shock absorber according to Claim 7, characterized in that one annular space (68, 100) each is provided on the control slide (34) and on the valve body (44).

9. Shock absorber according to one of Claims 1 to 8, characterized in that at least one valve (99) is provided in the further throttle passage (90).

## Revendications

1. Amortisseur de choc, en particulier pour véhicules, avec un piston d'amortissement (14) qui peut coulisser dans un cylindre (4) contenant un agent sous pression, le piston subdivisant celui-ci en une première et une seconde chambre de travail (24, 26), dans lequel le cylindre et le piston amortisseur sont articules respectivement sur une masse (16, 18), ainsi qu'avec au moins un canal d'étranglement, contenant une section transversale d'étranglement variable (30), entre les chambres de travail, et en outre un tiroir de commande (34) pouvant être réglé par une force de réglage agissant à l'encontre d'une force de rappel d'un ressort de rappel (36) par rapport à un corps de vanne, tiroir de commande (34) dont la position de réglage détermine la section transversale d'étranglement (30), amortisseur de choc caractérisé en ce que l'on prévoit un autre canal d'étranglement (90) qui peut être libéré en cas de panne.

2. Amortisseur de choc selon la revendication 1, caractérisé en ce que le canal d'étranglement (30) contenant la section transversale d'étranglement variable, est fermé en cas de panne.

3. Amortisseur de choc selon la revendication 1 ou la revendication 2, caractérisé en ce que l'autre canal d'étranglement (90) comprend au moins un canal (91) dans lequel est formée une surface d'étranglement opérationnelle (18) déterminant un amortissement de l'amortisseur de choc (2) en cas de panne, dans la zone d'au moins un canal (91).

4. Amortisseur de choc selon la revendication 3, caractérisé en ce que l'autre canal d'étranglement (90) comprend plusieurs canaux (91).

5. Amortisseur de choc selon la revendication 4, caractérisé en ce que les canaux (91) sont répartis à distance régulière sur le tiroir de commande (34).

6. Amortisseur de choc selon la revendication 4 ou 5, caractérisé en ce que l'autre canal d'étranglement (90) comprend deux canaux (91) qui sont disposés sur le tiroir de commande (34) en se faisant vis-à-vis en diagonale.

7. Amortisseur de choc selon l'une des revendications 1 à 6, caractérisé en ce que sur le tiroir de commande (34) et sur le corps de vanne (44), il est prévu respectivement une surface enveloppe (64, 66), de sorte que, comme composant de l'autre canal d'étranglement (90), au moins la surface enveloppe (66) du corps de vanne (44) est interrompue par une chambre annulaire (68) ou la surface enveloppe (64) du tiroir de commande (34) est interrompue par une chambre annulaire (100).

8. Amortisseur de choc selon la revendication 7, caractérisé en ce que l'on prévoit sur le tiroir de commande (34) et sur le corps de vanne (44), respectivement une chambre annulaire (68, 100).

9. Amortisseur de choc selon l'une des revendications 1 à 8, caractérisé en ce que l'on prévoit au moins une vanne (99) dans l'autre canal d'étranglement (90).
